# EUROPEAN PATENT APPLICATION

(11) **EP 1 515 382 A2**
(43) Date of publication of application: **16.03.2005**
(21) Application number: 04020666.6
(22) Date of filing: 31.08.2004
(51) Int. Cl.: H01M 8/04, F26B 21/00, F24F 3/00

(54) **Reaction gas temperature and humidity regulating module for fuel cell stack**

(30) Priority: 15.09.2003 CN 03156938
(71) Applicant: Asia Pacific Fuel Cell Technologies, Chunan, 350 Maioli (TW)
(72) Inventor: YS Yang, Jefferson, CA 92869 (US); Kao, Mike Pen-Mu, Anaheim CA 92807 (US); Li, Yingjeng James, Kwai Shan Taoyuan Hsien Taiwan 333 (TW)
(74) Representative: Goddar, Heinz J., Dr.

(57) **Abstract**

A device (2) for regulating temperature and humidity of a reaction gas to be supplied to a fuel cell stack includes a temperature regulation section (4) provided with a first gas guide board (42) through which the reaction gas flows, a coolant guide board (44) through which a coolant from the fuel cell stack flows and a first partition interposed between the first gas guide board and the coolant guide board for exchange of heat between the reaction gas and the coolant and a humidity regulation section (5) coupled to the temperature regulation section with a second partition therebetween and comprised of a second gas guide board (52) through which the temperature-regulated gas flows and a fluid guide board (54) through which a fluid from the fuel cell stack and rich of water contents flows and a humidity exchange film (43) interposed between the second gas guide board and fluid guide board to allow for exchange of water contents between the temperature-regulated gas and the fluid.

## Description

### BACKGROUND OF THE INVENTION

### 1. Field of the Invention

The present invention relates generally to the field of fuel cells, and in particular to a device for regulating temperature and humidity of reaction gas of fuel cells, especially a fuel cell stack.

### 2. Description of the Prior Art

Fuel cells are an electro-chemical device that makes use of electro-chemical reaction between a fuel, such as hydrogen, and an oxidizer, such as oxygen contained in the surrounding air, to generate electrical power. The fuel cells are advantageous in low contamination, high efficiency and high power density. Thus, developments and researches are intensively devoted to the fuel cell field for exploitation of the utilization thereof. A variety of fuel cells are available, among which proton exchange membrane fuel cell, abbreviated as PEMFC, is the most prospective one due to the advantages of low operation temperature, fast activation and high power density with respect to unit weight and volume.

A typical fuel cell stack is comprised of a number of membrane electrode assemblies (MEA). Each MEA comprises an anode catalyst layer, a high molecular proton exchange membrane and a cathode catalyst layer. A basic cell can be formed by coupling the MEA with a gas diffuser and a bipolar plate in an overlapping and stacked manner.

The operation of the fuel cells is dependent upon the proton exchange membrane that functions to convey hydrogen ions between the cathode and the anode of the fuel cell for the progress of the electro-chemical reaction. The performance of the fuel cells is heavily dependent upon the reaction conditions, such as operation temperature, humidity, hydrogen flow rate, and air flow rate. For example, the proper humidity must be maintained for the high molecular proton exchange membrane in order to provide a fuel cell stack of high performance.

Currently, to maintain proper operation humidity for the fuel cell, a humidifier is added in a supply pipe of reaction gas, which increases the relative humidity of the reaction gas flowing through the supply pipe. Such a humidity-regulated reaction gas is then supplied to the fuel cell. For example, in an air supply conduit through which air containing oxygen is driven by a blower toward the fuel cell, a humidifier is arranged in the supply conduit to add water to and thus increasing relative humidity of the air supplied through the conduit. Thus, the air may reach the fuel cell with proper relative humidity and the performance of the fuel cell can be maintained/enhanced.

On the other hand, a substantial amount of heat is generated in the fuel cell during the operation of the fuel cell. Such heat must be removed properly. Conventionally, liquid coolant, such as water, is employed in a cooling circuit for removal of such heat. In other words, water flows through a cooling conduit inside the fuel cell and removes the heat. For a typical fuel cell, the temperature of the water at a coolant outlet of the fuel cell is around 60-70°C. Recycle of such heat is of great interest for the application of the fuel cell.

It is also known in the industry to regulate the relative humidity of reaction gas by using the cooling water to operate the humidifier. This inevitably consumes a portion of the cooling water and replenishment of the cooling water has to be done periodically.

Techniques that recycle the heat generated during the operation of the fuel cell for improving the performance of the fuel cell are currently known. For example, the heat that is generated during the operation of he fuel cell is commonly employed to heat canisters that store hydrogen and in order to regulate the temperature of hydrogen supplied to the fuel cell. Although the temperature of reaction gas (hydrogen) has been regulated by using by-product (heat) of the fuel cell, none of the known techniques deal with regulation of both temperature and relative humidity of the reaction gas with "by-product" of the fuel cell.

Thus, the present invention is aimed to solve the problems of temperature and humidity regulation of a fuel cell by means of "by-products" of the fuel cell in order to provide an optimum operation of the fuel cell.

### SUMMARY OF THE INVENTION

Thus, a primary object of the present invention is to provide a fuel cell comprising a device for regulating temperature and humidity of reaction gas for the fuel cell whereby the fuel cell is operated at an optimum condition.

Another object of the present invention is to provide a device for properly regulating temperature and humidity of a reaction gas that is supplied to a fuel cell for maintaining optimum operation of the fuel cell.

A further object of the present invention is to provide a device that employs "by-products" of a fuel cell to regulate temperature and humidity of a reaction gas of the fuel cell whereby thermal energy of coolant of the fuel cell can be recycled and proper humidity of the fuel cell can be realized.

To achieve the above objects, in accordance with the present invention, there is provided a device for regulating temperature and humidity of a reaction gas to be supplied to a fuel cell stack, comprising a temperature regulation section comprised of a first gas guide board through which the reaction gas flows, a coolant guide board through which a coolant from the fuel cell stack flows and a first partition interposed between the first gas guide board and the coolant guide board for exchange of heat between the reaction gas and the coolant and a humidity regulation section coupled to the temperature regulation section with a second partition therebetween and comprised of a second gas guide board through which the temperature-regulated gas flows and a fluid guide board through which a fluid from the fuel cell stack and rich of water contents flows and a humidity exchange film interposed between the second gas guide board and fluid guide board to allow for exchange of water contents between the temperature-regulated gas and the fluid. The device allows for recycle and use of the thermal energy contained in the high temperature coolant discharged from the fuel cell stack and also allows for use of the water rich fluid from the chemical reaction of the fuel cell stack to regulate the temperature and humidity of the reaction gas so that an optimum operation of the fuel cell stack may be obtained without substantial additional expense for the conditioning the reaction gas. In addition, the coolant is guided back to the fuel cell through a closed loop and lose of the coolant can be neglected. No periodical replenishment of the coolant is necessary.

### BRIEF DESCRIPTION OF THE DRAWINGS

The present invention will be apparent to those skilled in the art by reading the following description of preferred embodiments thereof, with reference to the attached drawings, in which:

**Figure 1** is a perspective view of a fuel cell system incorporating a reaction gas temperature and humidity regulating device constructed in accordance with the present invention;

**Figure 2** is a perspective view of the reaction gas temperature and humidity regulating device of the present invention with inlet and outlet member detached;

**Figure 3** is a front view of the reaction gas temperature and humidity regulating device of the present invention;

**Figure 4** is a rear view of the reaction gas temperature and humidity regulating device of the present invention;

**Figure 5** is a top plan view of the reaction gas temperature and humidity regulating device of the present invention;

**Figure 6** is a side elevational view of the reaction gas temperature and humidity regulating device of the present invention;

**Figure 7** is a schematic block diagram of a fuel cell stack incorporating the reaction gas temperature and humidity regulating device of the present invention;

**Figure 8** is an exploded view of the reaction gas temperature and humidity regulating device of the present invention;

**Figure 9** is a cross-sectional view of a temperature regulation section of the reaction gas temperature and humidity regulating device of the present invention, serving a basic unit;

**Figure 10** is a cross-sectional view of a temperature regulating section of the reaction gas temperature and humidity regulating device in accordance with a second embodiment of the present invention, comprised of two basic units as illustrated in **Figure 9** stacked together;

**Figure 11** is a cross-sectional view of a humidity regulation section of the reaction gas temperature and humidity regulating device of the present invention, serving a basic unit; and

**Figure 12** is a cross-sectional view of a humidity regulating section of the reaction gas temperature and humidity regulating device in accordance with a second embodiment of the present invention, comprised of two basic units as illustrated in **Figure 11** stacked together.

### DETAILED DESCRIPTION OF PREFERRED EMBODIMENTS

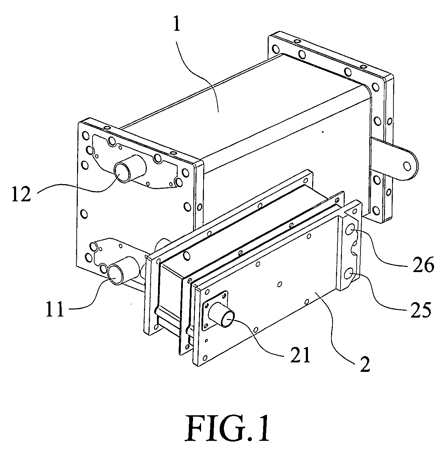

With reference to the drawings and in particular to **Figure 1**, a fuel cell system in which the present invention is embodied comprises a fuel cell stack 1 and a reaction gas temperature and humidity regulating device constructed in accordance with the present invention, generally designated with reference numeral **2**, which is coupled to the fuel cell stack **1** to regulate temperature and humidity of a reaction gas that is then supplied to the fuel cell stack **1**. As is known, two reaction gases, namely hydrogen and oxygen, are required in order to perform the chemical reaction inside the fuel cell stack **1**. Although hydrogen is supplied in a pure form from a canister, oxygen is supplied to the fuel cell stack in the form of regular air obtained from the surroundings. In the following description, air is taken as an example of the reaction gas for simplicity, yet it is apparent to those having ordinary skills to employ the present invention is other reaction gas for fuel cells.

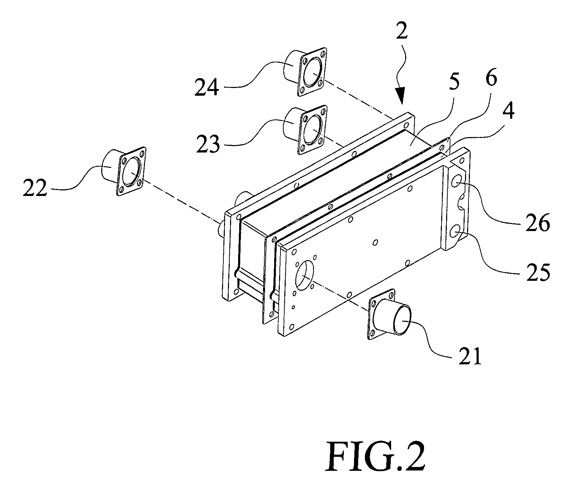

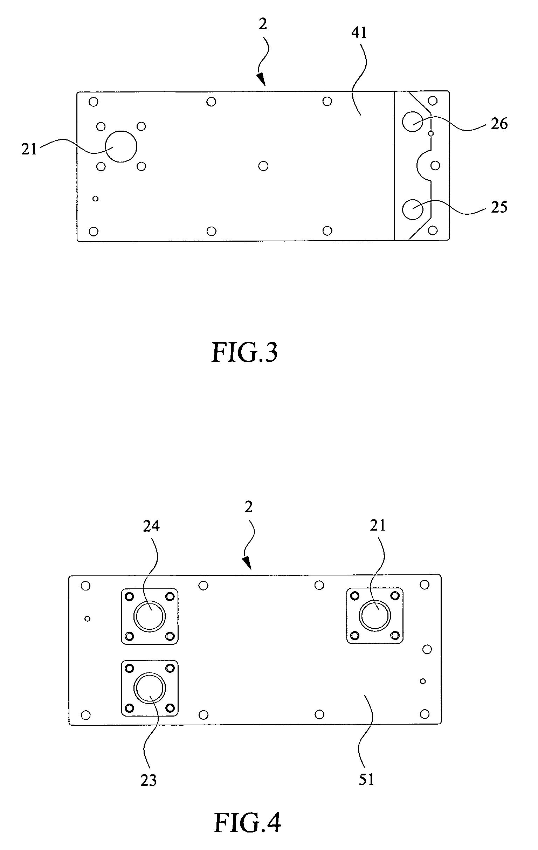

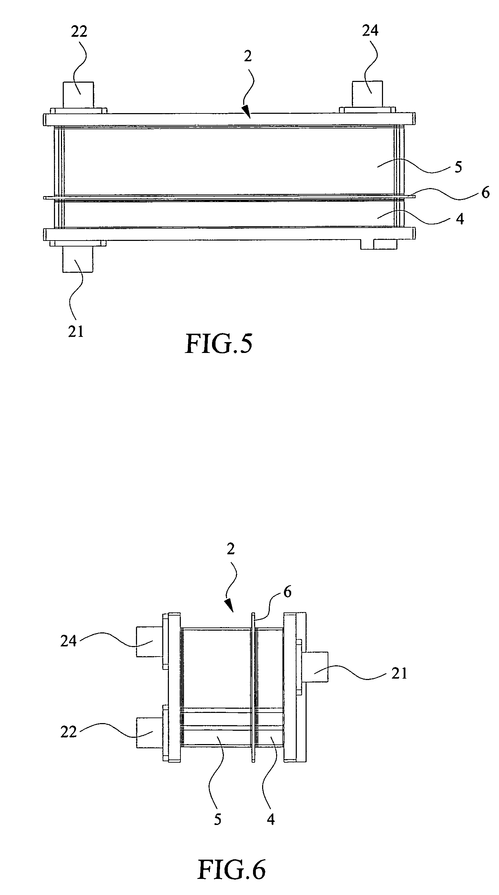

Also referring to **Figures 2-6** and **8**, the reaction gas temperature and humidity regulating device **2**, which will be abbreviated as "the regulating device" hereinafter, comprising a main body (not labeled) having first and second end boards **41, 51** defining a first entry opening **411**, a device-side coolant inlet **25**, and a device-side coolant outlet **26** and a first exit opening **511**, a second entry opening **512**, and a second exit opening **513**, respectively. A first inlet fitting **21** is mounted to the first end board **41** to be in fluid communication with the first entry opening **411**. A first outlet fitting **22** is mounted to the second end board **51** to be in fluid communication with the first exit opening **511**. Second inlet and outlet fittings **23, 24** are mounted to the second end board **51** to be in fluid communication with the second entry and exit openings **512, 513**, respectively. The openings **411, 511, 512, 513** will be further described.

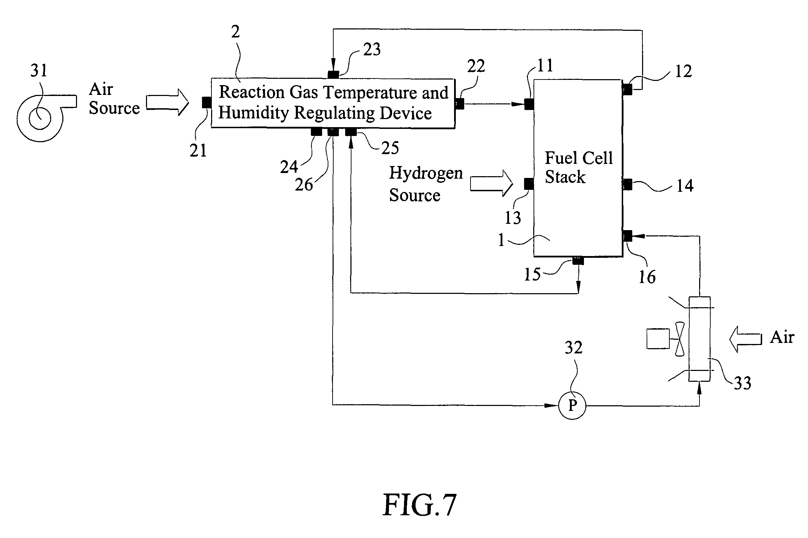

Also referring to **Figure 7**, a fuel cell system comprised the fuel cell stack **1** and the regulating device **2** in accordance with the present invention comprises a coolant circulation loop and a gas circulation loop connected between the fuel cell stack **1** and the regulating device **2**, as well as air supply and hydrogen supply. The air supply comprises a blower **31** that drives air from the surroundings into the regulating device **2** through the first inlet fitting **21**. Air is then regulated by the regulating device **2** to have desired temperature and humidity. The temperature- and humidity-regulated air is supplied through the first outlet fitting **22** to an air inlet **11** of the fuel cell stack **1**.

The hydrogen supply comprises a hydrogen source of any suitable form, such as a hydrogen canister that store hydrogen in solid form. Hydrogen from the canister is directly supplied to the fuel cell stack **1** through a hydrogen inlet **13**. Excessive hydrogen is discharged from the fuel cell stack **1** through a hydrogen outlet **14**.

The fuel cell stack **1** also comprises an outlet **12** through which a fluid, which can be a reaction product, is discharged from the fuel cell stack **1**. Such a fluid is rich of water contents and is conducted to the second inlet fitting **23** of the regulating device **2**, serving as a humidity source for regulating the humidity of the air flowing through regulating device **2**. This constitutes the gas circulation loop.

In the coolant circulation loop, coolant that cools the fuel cell stack **1** flows out of the fuel cells stack **1** through a cell-side coolant outlet **15** of the fuel cell stack **1**. The coolant that flows out of the cell-side coolant outlet **15** is at a high temperature around 60-70°C. The high temperature coolant is guided to the device-side coolant inlet **25** and enters the regulating device **2** for regulating the temperature of the air flowing through the regulating device **2**. When the coolant flows through the regulating device **2**, the coolant, serving as a heat source, exchanges heat with the air and thus the temperature of the coolant is lowered down. The coolant that flows through the regulating device **2** is discharged to a pump **32** through the device-side coolant outlet **26**. The pump **32** forces the coolant through a heat dissipation device **33**, such a heat radiator, through which heat is further removed from the coolant to bring the temperature of the coolant down to a desired low value. Such a low temperature coolant is then fed back into the fuel cell stack **1** through a cell-side coolant inlet **16** for once again removing heat from the fuel cell stack 1.

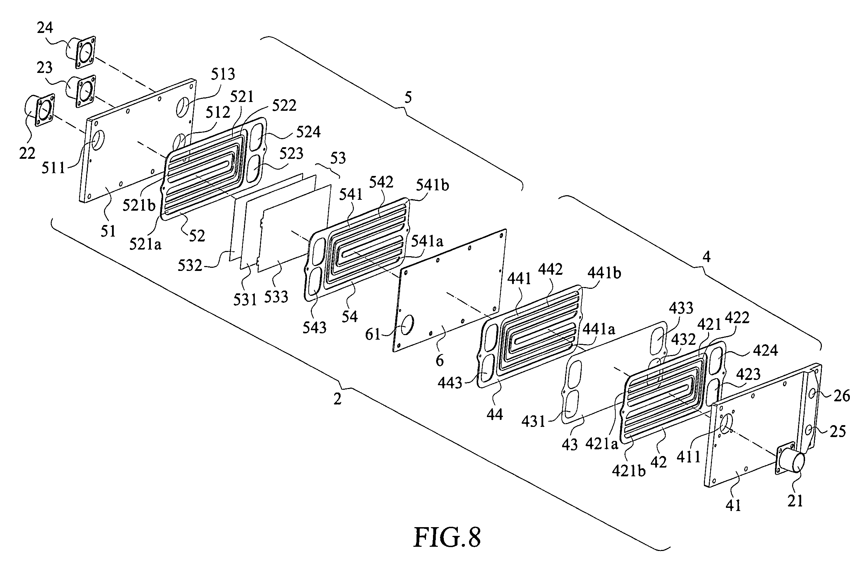

Particularly referring to **Figure 8**, the main body of the regulating device **2** is comprised of a temperature regulation section **4** and a humidity regulation section **5** between which a central partition board **6** is interposed. The temperature regulation section **4**, the central partition board **6**, and the humidity regulation section **5** are secured together in a sandwich form by fasteners, such as bolts (not shown), with the end boards **41, 51** exposed.

The temperature regulation section **4** comprises the first end board **41** that is arranged opposite to the central partition board **6** with a first gas guide board **42**, a temperature regulation side partition board **43** and a coolant guide board **44** interposed in sequence therebetween. The first gas guide board **42** forms at least one first gas channel **421**, which in the embodiment illustrated comprises three U-shaped channels that are spaced by isolation ribs **422** and are of segments substantially parallel to each other. The U-shaped channels **421** have a first end **421a** and a second end **421b**. The gas guide board **42** also defines two coolant passages **423, 424**.

The temperature regulation side partition board **43** forms two coolant passages **432, 433** corresponding to the coolant passages **423, 424** of the gas guide board **42** and a gas passage **431** corresponding to the second end **421b** of the gas channels **421**. The temperature regulation side partition board **43** is made of a thermally conductive material, such as an aluminum board.

The coolant guide board **44** forms at least one coolant channel **441**, which in the embodiment illustrated comprises three U-shaped channels that spaced by isolation ribs **442** and are of segments substantially parallel to each other. The U-shaped channels **441** have a first end **441a** and a second end **441b**. The coolant guide board **44** also defines a gas passage **443** corresponding in position to the gas passage **431** of the temperature regulation side partition board **43**. The coolant guide board **44** is isolated from the gas guide board **42** by the temperature regulation side partition board **43** that is in physical engagement with both the coolant guide board **44** and the gas guide boards **42** for heat transfer purposes.

Air that is supplied from the blower **31** is conducted into the temperature regulation section **4** through the first inlet fitting **21** and the first entry opening **411** of the first end board **41**. The air then enters the first end **421a** of the gas channels **421** of the first gas guide board **42**, and moves along the gas channels **421** to the second end **421b**, where air passes, in sequence, through the gas passage **431** of the partition board **43** and the gas passage **443** of the coolant guide board **44**. Eventually, air passes through an opening **61** defined in the central partition board **6** that is in physical engagement with the coolant guide board **44**.

On the other hand, the coolant discharged from the fuel cell stack **1** is supplied to the device-side coolant inlet **25** and flows into the regulating device **2** sequentially through the coolant passage **423** of the gas guide board **42** and the coolant passage **432** of the partition board **43** to reach the first end **441a** of the coolant channels **441** of the coolant guide board **44**. The coolant then moves along the coolant channels **441** to the second end **441b**, where the coolant flows in sequence through the coolant passage **433** of the partition board **43** and the coolant passage **424** of the gas guide board **42**. The coolant returns through the device-side coolant outlet **26** and is guided to the cell-side coolant inlet **16** for cooling the fuel cell stack **1** again.

Since the coolant and the air are simultaneously flowing through the coolant channels **441** of the coolant guide board **44** and the gas channels **421** of the first gas guide board **42** and since the coolant guide board **44** and the gas guide board **42**, which correspond in position to each other, are both in physical and tight engagement with the temperature regulation side partition board **43** that is made of thermally conductive material to allow for physical contact of the air and the coolant with the partition board **43**, heat exchange occurs between the coolant and the air flowing through the first gas guide board **42**. Thermal energy flows from the coolant that is of a high temperature around 60-70°C to the air that is of a lower temperature. Thus, the air is heated and the temperature of the air is increased.

Since the coolant circulation loop is a closed one, the total amount of the coolant flowing through the coolant circulation loop can be substantially preserved. Replenishment of the coolant due to lose in regulating the temperature and humidity of the air supplied to the fuel cell stack 1 is no longer necessary.

The humidity regulation section **5** comprises the second end board **51** opposing the central partition board **6** with a second gas guide board **52**, a humidity exchange section **53**, and a fluid guide board **54** interposed in sequence therebetween. The second gas guide board **52** forms at least one gas channel **521**, which in the embodiment illustrated comprises three U-shaped channels that are spaced by isolation ribs **522** and are of segments substantially parallel to each other. The U-shaped channels **521** have a first end **521a** and a second end **521b**. The second gas guide board **42** also defines two gas passages **523, 524**.

The fluid guide board **54** forms at least one fluid channel **541**, which in the embodiment illustrated comprises three U-shaped channels that are spaced by isolation ribs **542** and are of segments substantially parallel to each other. The U-shaped channels **541** have a first end **541a** and a second end **541b**. The fluid guide board **54** also defines an air passage **543** corresponding in position to the opening **61** of the central partition board **6** and the first end **521a** of the gas channels **521** of the second gas guide board **52**. The fluid guide board **54** is isolated from the second gas guide board **52** by the humidity exchange section **43** that is interposed between and in physical engagement with both the fluid guide board 54 and the second gas guide board **52**.

The humidity exchange section **53** is water permeable but does not allow air or gas to transmit therethrough, comprising a humidity exchange film **531** interposed between gas diffusion layers **532, 533**, which are respectively in physical and tight engagement with the second gas guide board **52** and the fluid guide board **54** to allow physical contact of the air flowing through the gas channels **521** and the fluid flowing through the fluid channels **541**. The humidity exchange section **53** is of a size that is sufficient to cover the fluid channels **541** of the fluid guide board **54** and the gas channels **521** of the second gas guide board **52**. However, the first and second end **521a, 521b** of the second gas guide board **521** are shielded by the humidity exchange section **53** and thus air that flows through the openings **61** of the central partition board **6** is allowed to freely flow into the first end **521a** of the second gas guide board **52**. The humidity exchange section **53** does not shield the gas passages **523, 524** of the second gas guide board **52**.

Air of which temperature has been regulated in the temperature regulation section **4** flows through the openings **61** of the central partition board **6**, and the air passage **543** of the fluid guide board **54** to reach the first ends **521a** of the second gas guide board **52**. The air then moves along the gas channels **521** to the second end **521b**, where air passes through the first exit opening **511** and the first outlet **22** for supply to the fuel cell stack **1** through the air inlet **11** of the fuel cell stack **1**.

On the other hand, the fluid rich of water contents that is discharged from the outlet **12** of the fuel cell stack **1** is supplied to the second inlet fitting **23** of the regulating device **23** and flows into the first end **541a** of the fluid guide board **54** sequentially through the second entry opening **512** of the second end board **51** and the gas passage **523** of the second gas guide board **52**. The fluid then moves along the fluid channels **541** to the second end **541b**, where the fluid flows in sequence through the gas passage **524** of the second gas guide board **52** and the second exit opening **513** of the second end board **53** and is then discharged out of the regulating device **2** via the second outlet fitting **24**.

The air of which the temperature has been regulated by the temperature regulation section **4** enters the humidity regulation section **5** in which the air is subject to regulation of humidity thereof by exchange of humidity with the fluid from the fuel cell stack **1**, which is rich of water contents, whereby the air may absorb water from the fluid and the relative humidity of the air may be increased to a desired range for enhancing the chemical reaction inside the fuel cell stack **1**.

Thus, air that is drawn in a fuel cell system comprised of the regulating device of the present invention, such as the one illustrated in **Figure 7**, is subject to regulation of both temperature and relative humidity whereby chemical reaction and thus the performance of the fuel cell system is maintained optimum.

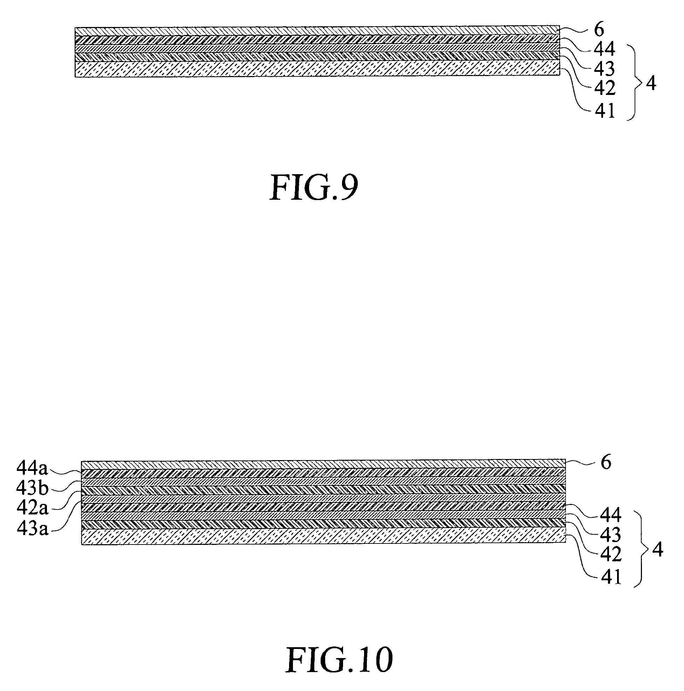

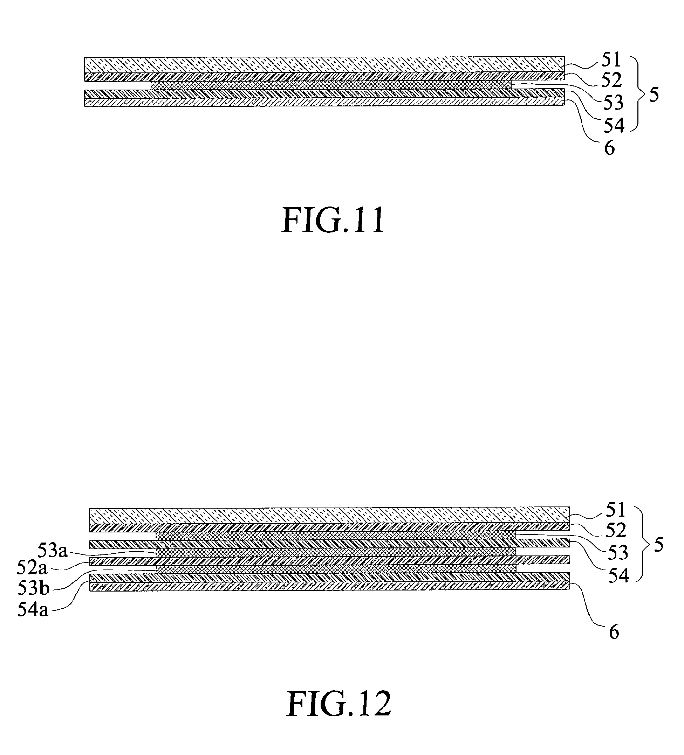

Also referring to Figures **9** and **11**, which show cross-sectional views of the temperature regulation section **4** and the humidity regulation section **5** described above. The temperature regulation section **4** illustrated and described above may serve as a temperature regulation unit and a number of temperature regulation units may be combined as a compound multi-unit temperature regulation means for a reaction gas temperature and humidity regulating device embodying the present invention. **Figure 10** shows a two-unit temperature regulation means comprising two temperature regulation units stacked together, each having a construction substantially identical to the temperature regulation section **4** described with reference to **Figure 8**. As shown in **Figure 10**, a first temperature regulation section **4** comprised of a gas guide board **42**, a partition board **43**, and a coolant guide board **44** is stacked on a second temperature regulation section comprised of a gas guide board **42a**, a partition board **43b**, and a coolant guide board **44a** with a further partition board **43a** interposed between the first and second temperature regulation sections and in contact with the coolant guide board **44** and the gas guide board **42a**. Such a structure can be repeated with an additional partition board interposed between adjacent ones of the temperature regulation sections.

Similarly, the humidity regulation section **5** can server as a basic unit for constitute a humidity regulation unit and a number of humidity regulation units may be combined as a compound multi-unit humidity regulation means for a reaction gas temperature and humidity regulating device embodying the present invention. **Figure 12** shows a two-unit humidity regulation means comprising two humidity regulation units stacked together, each having a construction substantially identical to the humidity regulation section **5** described with reference to **Figure 8**. As shown in **Figure 12**, a first humidity regulation section **5** comprised of a gas guide board **52**, a humidity exchange section **53**, and a fluid guide board **54** is stacked on a second humidity regulation section comprised of a gas guide board **52a**, a humidity exchange section **53b**, and a fluid guide board **54a** with a further humidity exchange section **53a** interposed between the first and second humidity regulation sections and in contact with the fluid guide board **54** and the gas guide board **52a**. Such a structure can be repeated with an additional humidity exchange section interposed between adjacent ones of the humidity regulation sections.

Although the present invention has been described with reference to the preferred embodiments thereof, it is apparent to those skilled in the art that a variety of modifications and changes may be made without departing from the scope of the present invention which is intended to be defined by the appended claims.

The features disclosed in the foregoing description, in the claims and/or in the accompanying drawings may, both separately and in any combinations thereof, be material for realizing the invention in diverse forms thereof.

## Claims

1. A device for regulating temperature and humidity of a reaction gas comprising:
temperature regulation means comprising at least one temperature regulation unit comprising:
a temperature regulation side gas guide board defining a gas channel having first and second ends, the temperature regulation side gas guide board being adapted to receive the reaction gas of which the temperature and humidity to be regulated at the first end and guide the reaction gas to flow through the gas channel to the second end,
a coolant guide board defining a coolant channel having third and fourth ends, the coolant guide board being adapted to receive at the third end thereof a coolant at a temperature different from the temperature of the reaction gas and guide the coolant to flow through the coolant channel to the fourth end, and
a temperature regulation side partition board interposed between the gas guide board and the coolant guide board for exchange of heat between the reaction gas and the coolant to regulate the temperature of the reaction gas whereby a temperature-regulated reaction gas is discharged at the second end of the gas channel of the temperature regulation side gas guide board;
humidity regulation means comprising at least one humidity regulation unit comprising:
a humidity regulation side gas guide board defining a gas channel having fifth and sixth ends, the humidity regulation side gas guide board receiving the temperature-regulated gas at the fifth end and guiding the temperature-regulated gas to flow through the gas channel to the sixth end;
a fluid guide board defining a fluid channel having seventh and eighth ends, the fluid guide board being adapted to receive at the seventh end a fluid that has water contents that is different from water contents associated with the humidity of the temperature-regulated gas and guide the fluid to flow through the fluid channel to the eighth end; and
a humidity exchange section interposed between the humidity regulation side gas guide board and the fluid guide board and comprising a water permeable and gas impermeable film in contact with the temperature-regulated gas flowing through the gas channel of the humidity regulation side gas guide board and the fluid flowing through the fluid channel of the fluid guide board to allow for exchange of water contents between the temperature regulated gas and the fluid and thus regulating humidity of the temperature-regulated gas whereby a humidity-regulated and temperature-regulated gas is discharged at the sixth end of the gas channel of the humidity regulation side gas guide board.

2. The device as claimed in Claim 1 further comprising a central partition board interposed between the temperature regulation means and the humidity regulation means, the central partition board defining an opening corresponding in position to the second end of the gas channel of the temperature regulation side gas guide board to allow the temperature-regulated gas to flow to the fifth end of the gas channel of the humidity-regulated gas guide board.

3. The device as claimed in Claim 1, wherein the temperature regulation side partition board is made of thermally conductive materials.

4. The device as claimed in Claim 1, wherein the humidity exchange section of the humidity regulation means comprises a humidity exchange film that allows for transmission of water but does not allow for transmission of gas, the film being interposed between two gas diffusion layers that are in contact with the temperature-regulated gas flowing through the gas channel of the humidity regulation side gas guide board and the fluid flowing through the fluid channel of the fluid gas guide board.

5. The device as claimed in Claim 1, wherein the gas channel of the temperature regulation side gas guide board and the coolant channel of the coolant guide board are both U-shaped and opposite to each other with respect to the temperature regulation side partition board and wherein the gas channel of the humidity regulation side gas guide board and the fluid channel of the fluid guide board are both U-shaped and opposite to each other with respect to the humidity exchange section.

6. The device as claimed in Claim 1, wherein the temperature regulation side gas guide board defines a plurality of U-shaped gas channels having segments spaced from and substantially parallel to each other, the coolant guide board defines a plurality of U-shaped coolant channels having segments spaced from and substantially parallel to each other, the humidity regulation side gas guide board defines a plurality of U-shaped gas channels having segments spaced from and substantially parallel to each other, and the fluid guide board defines a plurality of U-shaped fluid channels having segments spaced from and substantially parallel to each other.

7. A device for regulating humidity of a reaction gas to be supplied to a fuel cell stack, the device comprising:
a humidity regulation unit comprising:
a gas guide board defining a gas channel having a first end and a second end, the gas guide board receiving the reaction gas at the first end and guiding the reaction gas to flow through the gas channel to the second end;
a fluid guide board defining a fluid channel having third and fourth ends, the fluid guide board being adapted to receive a fluid that is rich of water contents at the third end and guide the fluid to flow through the fluid channel to the fourth end; and
a humidity exchange section interposed between the humidity regulation side gas guide board and the fluid guide board and comprising a water permeable and gas impermeable film in contact with the reaction gas flowing through the gas channel of the gas guide board and the fluid flowing through the fluid channel of the fluid guide board to allow for exchange of water contents between the reaction gas and the fluid and thus regulating humidity of the reaction gas.

8. The device as claimed in Claim 7, wherein the humidity exchange section comprises a humidity exchange film interposed between two gas diffusion layers that are in contact with the reaction gas flowing through the gas channel of the gas guide board and the fluid flowing through the fluid channel of the fluid gas guide board.

9. The method as claimed in Claim 7, wherein gas guide board defines a plurality of spaced and substantially parallel U-shaped gas channels and wherein the fluid guide board defines a plurality of spaced and substantially parallel U-shaped fluid channels.

10. The method as claimed in Claim 7 further comprising a blower that conveys the reaction gas to the first end of the gas channel and wherein the second end of the gas channel is connected to an inlet of the fuel cell stack to conduct the humidity regulated gas to the fuel cell stack.

11. The method as claimed in Claim 7, wherein the third end of the fluid channel of the fluid guide board is connected to a discharge opening of the fuel cell to receive a reaction product fluid from the fuel cell stack that is rich of water contents.

12. A fuel cell system comprising:
a fuel cell stack having a gas inlet and a fluid outlet, and coolant inlet and outlets;
a device for regulating temperature and humidity of a reaction gas to be supplied to the gas inlet of the fuel cell stack, the device comprising:
a temperature regulation section defining a first gas channel having a first end adapted to receive a reaction gas flow from a reaction gas supply and a second end and a coolant channel having a third end connected to the coolant outlet of the fuel cell stack to receive a coolant flow from the fuel cell and a fourth end, wherein the reaction gas flows through the first gas channel to the second end, while the coolant flows through the coolant channel to the fourth end to allow heat exchange between the coolant and the reaction gas and thus regulating the temperature of the reaction gas and supplying a temperature-regulated gas; and
a humidity regulation section defining a second gas channel having a fifth end connected to the second end of the first gas channel to receive the temperature-regulated gas and a sixth end and a fluid channel having a seventh end connected to the fluid outlet of the fuel cell to receive a fluid that is rich of water contents from the fuel cell stack and an eighth end, wherein the temperature-regulated gas flows through the second gas channel to the fourth end, while the fluid flows through the fluid channel to the eighth end to allow for exchange of water contents between the fluid and the temperature-regulated gas and thus regulating the humidity of the reaction gas and supplying a temperature- and humidity-regulated gas.

13. The fuel cell system s claimed in Claim 12, wherein the fourth end of the coolant channel is connected to the coolant inlet for conducting the coolant back into the fuel cell stack.

14. The fuel cell system as claimed in Claim 12, wherein the coolant discharged at the coolant outlet of the fuel cell stack is of a temperature around 60-70°C.

15. The fuel cell system as claimed in Claim 12, wherein the humidity regulation section comprising humidity exchange means that is water permeable but gas impermeable.
